# FASCICULE DE BREVET EUROPEEN

(11) **EP 3 265 954 B1**
(45) Date de publication et mention de la délivrance du brevet: **17.02.2021**
(21) Numéro de dépôt: 16710270.6
(22) Date de dépôt: 04.03.2016
(51) Int. Cl.: G07F 7/08, G06K 7/10

(54) **PROCÉDÉ DE BLOCAGE DE COMMUNICATIONS INTERNES À UN DISPOSITIF ÉLECTRONIQUE**
VERFAHREN ZUR BLOCKIERUNG INTERNER KOMMUNIKATION IN EINER ELEKTRONISCHEN VORRICHTUNG
METHOD OF BLOCKING INTERNAL COMMUNICATIONS INSIDE AN ELECTRONIC DEVICE

(30) Priorité: 06.03.2015 FR 1551921
(43) Date de publication de la demande: 10.01.2018
(73) Titulaire: IDEMIA France, 92400 Courbevoie (FR)
(72) Inventeur: LESEIGNEUR, Gilles, 92700 Colombes (FR)
(74) Mandataire: Cabinet Beau de Loménie
(86) Numéro de dépôt international: PCT/FR2016/050508
(87) Numéro de publication internationale: WO 2016/142612

(56) Documents cités:
- WO-A1-01/08087
- US-A1- 2009 312 011
- US-A1- 2011 271 044

## Description

### Arrière-plan de l'invention

La présente invention concerne les dispositifs électroniques, tels que les cartes à puce par exemple, aptes à coopérer avec un lecteur externe. L'invention porte plus particulièrement sur le contrôle de communications internes à de tels dispositifs lorsque ceux-ci sont en fonctionnement.

Les cartes à puce sont aujourd'hui utilisées dans de nombreux domaines d'application. Elles sont notamment destinées à réaliser des opérations bancaires, téléphoniques, d'identification et/ou d'authentification... Ces opérations peuvent être réalisées soit par contact en insérant typiquement la carte dans un lecteur (mode avec contact), soit à distance (mode sans contact) par couplage électromagnétique, généralement de type inductif, entre une borne d'émission-réception et une carte à puce placée dans la zone d'action de la borne.

Les carte à puce sont généralement capables de fonctionner en mode avec contact (e.g. selon ISO 7816-2) en utilisant des contacts externes d'un module électronique (ou transpondeur) intégré à la carte. Ces contacts externes sont disposés à la surface de la carte à puce de façon à être accessibles par un lecteur externe prévu pour coopérer par contact avec ces contacts externes.

De façon connue, certaines cartes à puce sont aptes à fonctionner en mode sans contact avec un lecteur externe prévu à cet effet. Pour ce faire, ces cartes à puce sont munies d'une antenne radiofréquence (RF). Les échanges d'informations entre la carte à puce et le lecteur externe de type sans contact se font par l'antenne RF en mode sans contact (e.g. selon ISO 14443).

Une « carte à puce mixte » (appelée aussi carte « dual interface » ou carte à double interface de communication) désigne une carte à puce apte à fonctionner en mode avec contact et en mode sans contact.

De nouvelles cartes à puce, dites cartes intelligentes, ont récemment vu le jour, ces cartes pouvant intégrer divers composants (capteurs biométriques, écran...) permettant d'améliorer l'expérience de l'utilisateur, en termes notamment de sécurisation de la carte à puce ou de fourniture de service à l'utilisateur.

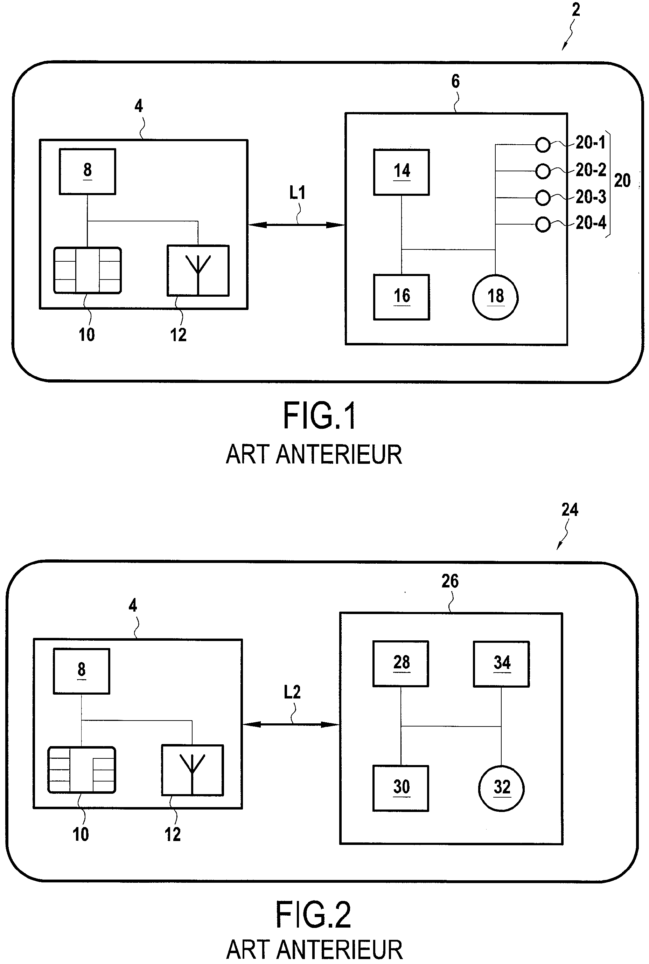

A cette fin, en plus d'un module électronique conventionnel (appelé généralement « élément sécurisé ») comportant un premier microprocesseur, il est connu d'inclure dans une carte à puce un deuxième microprocesseur externe à cet élément sécurisé et apte à communiquer avec le premier microprocesseur. Typiquement, un tel élément sécurisé est apte à coopérer de façon conventionnelle avec un lecteur externe en mode avec contact ou en mode sans contact, par exemple pour mettre en œuvre une transaction. Par ailleurs, le deuxième microprocesseur est apte à communiquer avec l'élément sécurisé et sert généralement à mettre en œuvre au moins une fonction en coopération avec ledit élément sécurisé. Cette fonction porte par exemple sur la sélection d'une application à mettre en œuvre par l'élément sécurisé (comme décrit en référence à la **figure 1** ci-dessous) ou sur l'affichage d'une information donnée (comme décrit en référence à la **figure 2** ci-dessous).

Plus spécifiquement, la **figure 1** représente un exemple connu d'une carte à puce 2 de type dual interface comprenant un élément sécurisé 4 et un module électronique 6, ceux-ci étant aptes à communiquer ensemble via une liaison L1 interne à la carte.

L'élément sécurisé 4 comprend notamment un premier microprocesseur 8 apte à coopérer avec un lecteur externe (non représenté) en utilisant des contacts externes 10 ou une antenne RF 12 dont est pourvu l'élément sécurisé 4.

Le module 6 comprend ici un deuxième microprocesseur 14 alimenté par une batterie 16 et pouvant recevoir des instructions d'un utilisateur à partir d'un bouton 18. En actionnant ce bouton, l'utilisateur est capable de commander la sélection d'une application particulière. Sur sélection par l'utilisateur d'une application donnée à l'aide du bouton 18, le deuxième microprocesseur 14 envoie une commande au microprocesseur 8 de l'élément sécurisé 4. En réponse à cette commande, le microprocesseur 8 est configuré pour sélectionner et mettre en œuvre l'application choisie par l'utilisateur.

Le microprocesseur 14 peut en outre être configuré pour afficher, à l'aide de voyants lumineux 20-1 à 20-4 (désignés collectivement par 20), l'application sélectionnée en réponse à la commande de l'utilisateur.

La **figure 2** représente un exemple d'une carte à puce 24 de type dual interface similaire à la carte à puce 2. La carte à puce 24 comprend un élément sécurisé 4 comme déjà décrit et un module électronique 26 apte à communiquer avec l'élément sécurisé 4 via une liaison L2 interne à la carte.

Le module électronique 26 comprend un microprocesseur 28 alimenté par une batterie 30 et pouvant recevoir des instructions d'un utilisateur à partir d'un bouton 32. En actionnant ce bouton, l'utilisateur est par exemple capable d'initier ou de contrôler une transaction avec un lecteur externe (non représenté).

Le microprocesseur 28 est en outre ici apte à afficher sur un afficheur 34 une information donnée, telle qu'un montant d'une transaction ou une monnaie sélectionnée par l'utilisateur.

Les structures illustrées à titre d'exemples en **figures 1** et **2** permettent avantageusement de mettre en œuvre dans la carte à puce des fonctions utiles notamment pour l'utilisateur, et ce à l'aide d'un module électronique (ou plus généralement d'une unité de traitement) apte à coopérer avec l'élément sécurisé via une liaison interne à la carte.

Cependant, il a été observé que les cartes à puce présentant ce type d'architecture font face à des problèmes de fonctionnement. Conventionnellement, l'élément sécurisé dans de telles cartes à puce n'est pas optimisé pour gérer au mieux des commandes provenant à la fois d'un lecteur externe (en mode avec et/ou sans contact) et des commandes provenant d'un module électronique (ou unité de traitement) interne à la carte. L'élément sécurisé peut rencontrer des difficultés à prendre en compte de multiples commandes provenant de ces différentes sources, causant le cas échéant des conflits néfastes pour le bon fonctionnement de l'élément sécurisé.

Il a été observé que de tels conflits se produisent en particulier lorsque des commandes provenant d'un lecteur externe et d'un tel module électronique de la carte à puce sont reçues simultanément ou quasi-simultanément par l'élément sécurisé.

Il n'existe pas aujourd'hui de solution permettant notamment de résoudre, dans une carte à puce (et plus généralement dans un dispositif électronique apte à coopérer avec un lecteur externe), les problèmes de conflits évoqués ci-dessus lorsque l'élément sécurisé est amené à communiquer avec, d'une part, un lecteur externe et, d'autre part, avec une unité de traitement interne à la carte à puce mais externe à l'élément sécurisé.

WO 01/08087 A1 décrit une carte à puce comprenant un composant sécurisé, un gestionnaire de périphérique et des contacts externes. Le gestionnaire de périphériques comporte des moyens de détection (détecteur) de la connexion à un lecteur externe et des moyens de déconnexion des contacts par l'intermédiaire d'un signal provenant des moyens de détection d'un lecteur externe. Le gestionnaire de périphérique et le composant sécurisé sont reliés en parallèle à l'interface de communication constituée par les plages de contact.

### Objet et résumé de l'invention

Afin de résoudre notamment les problèmes mentionnés ci-avant, la présente invention prévoit un dispositif électronique selon la revendication 1, une procédé de blocage selon la revendication 14, un programme d'ordinateur selon la revendication 16 et un support d'enregistrement selon la revendication 17.

L'invention est avantageuse en ce qu'elle permet d'éviter tous conflits au niveau de l'élément sécurisé entre une commande dite « externe » reçue d'un lecteur externe au dispositif électronique en mode avec contact, et une commande dite « interne » reçue d'une unité de traitement interne à la carte à puce. Comme indiqué ci-avant, de tels conflits peuvent conduire à des problèmes de fonctionnement au niveau de l'élément sécurisé dans la mesure où ce dernier n'est pas prévu pour traiter simultanément une commande externe et une commande interne comme définies ci-avant.

L'invention permet en particulier d'éviter que se produise une situation conflictuelle dans laquelle une commande interne et une commande externe sont reçues simultanément par l'élément sécurisé de la carte à puce.

L'invention est également avantageuse en ce qu'elle peut être mise en oeuvre sans que cela affecte la structure et le fonctionnement de l'élément sécurisé de la carte à puce.

Selon un mode de réalisation particulier, les contacts sont conformes à la norme ISO 7816.

Selon un mode de réalisation particulier, ledit au moins un contact prédéfini comprend (ou est) les contacts définis en tant que Vcc, RST, CLK, GND et IO par la norme ISO 7816.

Selon un mode de réalisation particulier, l'unité de contrôle est configurée pour bloquer l'envoi, via chacun des contacts de l'élément sécurisé, de chaque commande de l'unité de traitement à l'élément sécurisé tant qu'une dite communication par contact est en cours.

Selon un mode de réalisation particulier, la première unité de détection est connectée à l'un desdits contacts externes, dit contact d'alimentation (Vcc), destiné à recevoir une alimentation électrique lorsque l'élément sécurisé coopère en mode avec contact avec le premier lecteur externe afin d'alimenter électriquement ledit élément sécurisé.

La conversion selon la revendication 1 permet d'éviter que la première unité de détection ne perturbe le fonctionnement de l'élément sécurisé ES.

Selon un mode de réalisation particulier, l'élément sécurisé comprend une première antenne radiofréquence, ledit élément sécurisé étant apte à coopérer avec un deuxième lecteur externe audit dispositif électronique selon un mode sans contact en utilisant ladite première antenne radiofréquence, ledit dispositif électronique comprenant :
- une deuxième unité de détection apte à détecter si une communication sans contact est en cours en mode sans contact entre l'élément sécurisé et le deuxième lecteur externe ;
   l'unité de contrôle étant configurée pour bloquer l'envoi, via ledit au moins un contact prédéfini, de chaque commande de l'unité de traitement à l'élément sécurisé tant qu'au moins l'une parmi une dite communication par contact et une dite communication sans contact est en cours.

Selon un mode de réalisation particulier, le dispositif électronique comprend une deuxième antenne radiofréquence isolée de la première antenne radiofréquence,
la deuxième unité de détection étant apte, à partir de la deuxième antenne radiofréquence, à détecter un signal radiofréquence émis ou reçu par la première antenne radiofréquence indiquant qu'une dite communication sans contact est en cours entre l'élément sécurisé et le deuxième lecteur externe.

L'utilisation de la deuxième antenne RF est avantageuse en ce qu'elle permet notamment d'éviter qu'une communication sans contact entre l'élément sécurisé et un lecteur externe soit perturbée par la deuxième unité de détection.

Selon un mode de réalisation particulier, la deuxième unité de détection est apte à convertir une tension alternative obtenue à partir de la première antenne radiofréquence en une tension continue.

Selon un mode de réalisation particulier, l'unité de traitement est configurée pour déterminer qu'une dite communication sans contact est en cours seulement si la tension continue est au moins égale à une deuxième valeur seuil prédéterminée.

Selon un mode de réalisation particulier, l'unité de contrôle comprend un commutateur à l'interface entre l'élément sécurisé et l'unité de traitement, ledit commutateur étant apte à commuter entre un état bloquant et un état passant,
le commutateur étant configuré pour se fixer à l'état bloquant lorsque l'unité de contrôle bloque ledit envoi de chaque commande de l'unité de traitement via ledit au moins un contact prédéfini, de sorte à isoler électriquement l'élément sécurisé vis-à-vis de l'unité de traitement.

Une telle isolation électrique est avantageuse en ce que cela permet notamment d'éviter qu'une communication par contact entre l'élément sécurisé et un lecteur externe soit perturbée par l'unité de traitement.

Selon un mode de réalisation particulier, l'unité de traitement est apte à réaliser, en coopération avec l'élément sécurisé, une sélection d'une application à exécuter par l'élément sécurisé,
l'unité de traitement étant apte à réaliser cette sélection à partir d'une instruction d'un utilisateur reçue via un actionneur du dispositif électronique.

Selon un mode de réalisation particulier, l'unité de traitement est apte à obtenir une information à partir d'une donnée reçue de l'élément sécurisé et à commander un affichage de ladite information en utilisant une unité d'affichage du dispositif électronique.

Selon un mode de réalisation particulier, le disposit électronique est une carte à puce.

La présente invention concerne aussi un procédé de blocage selon la revendication 14.

On notera que les divers modes de réalisation mentionnés ci-avant en relation avec le dispositif électronique de l'invention s'appliquent de façon analogue au procédé de blocage de l'invention.

Selon notamment un mode de réalisation particulier, l'élément sécurisé comprend une première antenne radiofréquence, l'élément sécurisé étant apte à coopérer avec un deuxième lecteur externe au dispositif électronique selon un mode sans contact en utilisant la première antenne radiofréquence, ledit dispositif électronique comprenant :
- une deuxième vérification pour déterminer si une communication sans contact est en cours en mode sans contact entre l'élément sécurisé et le deuxième lecteur externe ; et
- le blocage de l'envoi, via ledit au moins un contact prédéfini, de chaque commande de l'unité de traitement à l'élément sécurisé tant qu'au moins l'une parmi une dite communication par contact et une dite communication sans contact est en cours.

La présente invention concerne aussi un programme d'ordinateur selon la revendication 16.

En conséquence, l'invention vise aussi un programme d'ordinateur sur un support d'informations (ou support d'enregistrement), ce programme étant susceptible d'être mis en œuvre dans un dispositif électronique tel qu'une carte à puce ou plus généralement dans un ordinateur, ce programme comportant des instructions adaptées à la mise en œuvre des étapes d'un procédé de blocage tel que défini ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La présente invention concerne aussi un support d'enregistrement selon la revendication 17 ou ledit support est lisible par un dispositif électronique tel qu'une carte à puce, et plus généralement par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
- la figure 1 déjà décrite représente, de manière schématique, une carte à puce conventionnelle permettant à un utilisateur de sélectionner une application donnée ;
- la figure 2 déjà décrite représente, de manière schématique, une carte à puce conventionnelle apte à afficher une information utile à l'utilisateur ;
- la figure 3 représente, de manière schématique, une carte à puce conforme à un premier mode de réalisation ;
- la figure 4 représente, sous forme d'un organigramme, les principales étapes d'un exemple de procédé de blocage mis en oeuvre dans une carte à puce conforme au premier mode de réalisation illustré en figure 3 ;
- la figure 5 représente un exemple de mise en œuvre d'une carte à puce selon le premier mode de réalisation représenté en figure 3 ; et
- la figure 6 représente, de manière schématique, une carte à puce conforme à un deuxième mode de réalisation ;

### Description détaillée de plusieurs modes de réalisation

La présente invention concerne les dispositifs électroniques, tels que les cartes à puce par exemple, aptes à coopérer avec un lecteur externe. L'invention porte plus particulièrement sur le contrôle de communications internes à de tels dispositifs lorsque ceux-ci sont en fonctionnement.

Dans ce document, des exemples de mise en œuvre de l'invention sont décrits de manière non limitative en relation avec une carte à puce de type dual interface. On comprendra toutefois que l'invention s'applique plus largement à tous dispositifs électroniques aptes à coopérer avec un lecteur externe au moins en mode avec contact, et le cas échéant aussi en mode sans contact, par exemple pour mettre en œuvre une transaction donnée.

L'invention peut s'appliquer notamment à des cartes à puce conforme à la norme ISO 7816.

Sauf indications contraires, les éléments communs ou analogues à plusieurs figures portent les mêmes numéros de références et présentent des caractéristiques identiques ou analogues, de sorte que ces éléments communs ne sont généralement pas à nouveau décrits par souci de simplicité.

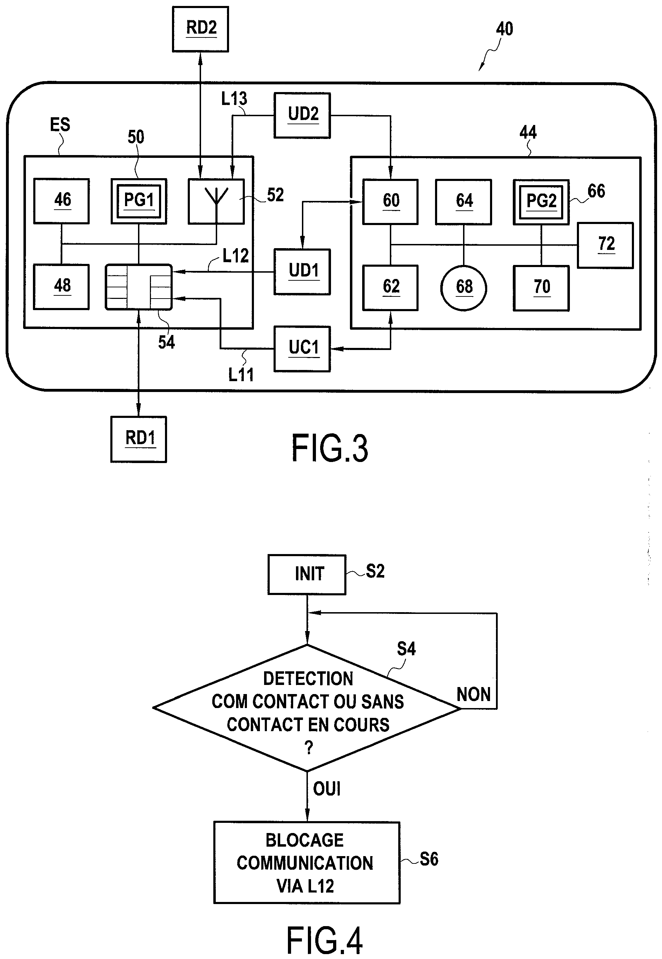

La **figure 3** représente, de manière schématique, l'architecture d'une carte à puce 40 conforme à un premier mode de réalisation de l'invention. La carte à puce 40 est ici conforme à la norme ISO 7816.

Plus particulièrement, la carte à puce 40 comprend un module électronique ES constituant un élément sécurisé apte à coopérer de manière conventionnelle soit en mode avec contact soit en mode sans contact avec un lecteur externe à la carte à puce 40.

La carte à puce 40 comprend en outre une unité de traitement 44 apte à envoyer des commandes (ou données) à l'élément sécurisé ES via une liaison interne L11.

Dans cet exemple, l'élément sécurisé ES comporte un microprocesseur 46, une mémoire volatile réinscriptible (de type RAM) 48, une mémoire non volatile réinscriptible 50 (de type Flash par exemple), une antenne radiofréquence (RF) 52 et des contacts externes 54.

La mémoire non volatile réinscriptible 50 comprend un programme d'ordinateur PG1 comportant des instructions pouvant être mises en oeuvre par le microprocesseur 46 notamment pour coopérer en mode avec contact ou sans contact avec lecteur externe approprié. Alternativement, la mémoire 50 dans laquelle est stockée le programme d'ordinateur PG1 peut être une mémoire morte (de type ROM).

L'élément sécurisé ES est ici apte à coopérer en mode avec contact avec un premier lecteur externe RD1 en utilisant au moins l'un des contacts externes 54 prévus à cet effet. Pour ce faire, le lecteur externe RD1 se connecte électriquement aux contacts externes 54 afin de pouvoir échanger des signaux avec l'élément sécurisé ES, et plus particulièrement avec le microprocesseur 46. La coopération par contact entre une carte à puce et un lecteur externe approprié est connue en soi et ne sera donc pas développée d'avantage dans le présent exposé par souci de simplicité.

Dans cet exemple, l'élément sécurisé ES est en outre apte à coopérer en mode sans contact avec un deuxième lecteur externe RD2 en utilisant l'antenne RF 52. Typiquement, l'élément sécurisé ES communique avec le lecteur externe RD2 en mode sans contact en couplant électromagnétiquement (par induction par exemple) l'antenne RF 52 avec une antenne RF du lecteur externe RD2. La coopération sans contact entre une carte à puce et un lecteur externe approprié est connue en soi et ne sera donc pas développée d'avantage dans le présent exposé par souci de simplicité. Comme déjà indiqué, on peut toutefois aussi mettre en oeuvre l'invention sans que l'élément sécurisé ES n'est la capacité de fonctionner en mode sans contact, la présence de l'antenne RF 52 n'étant alors pas nécessaire.

Par ailleurs, l'unité de traitement 44 comprend un microprocesseur 60, une interface de communication 62, une mémoire volatile réinscriptible (de type RAM) 64, une mémoire non volatile réinscriptible 66 (de type Flash par exemple), un actionneur 68, une batterie 70 et au moins un voyant lumineux 72, de type LED par exemple.

La mémoire non volatile réinscriptible 66 constitue un support d'enregistrement conforme à un mode de réalisation particulier de l'invention, lisible par le microprocesseur 60, et sur lequel est enregistré un programme d'ordinateur PG2 conforme à un mode de réalisation particulier de l'invention. Alternativement, la mémoire 66 dans laquelle est stockée le programme d'ordinateur PG2 peut être une mémoire morte (de type ROM).

Le programme PG2 comporte ici des instructions pour l'exécution d'un procédé de blocage selon un mode de réalisation particulier de l'invention. Les étapes de ce procédé sont représentées, dans un mode particulier de réalisation de l'invention, sur la **figure 4** décrite ultérieurement.

L'interface de communication 62 permet au microprocesseur 60 de communiquer, via la liaison interne L11 et au moins un contact externe prédéfini 54, avec l'élément sécurisé ES, et plus particulièrement avec le microprocesseur 46. Dans l'exemple considéré ici, l'interface 62 est connectée via la liaison L11 aux contacts externes 54.

Dans un mode de réalisation particulier, l'interface 62 est incluse dans le microprocesseur 60.

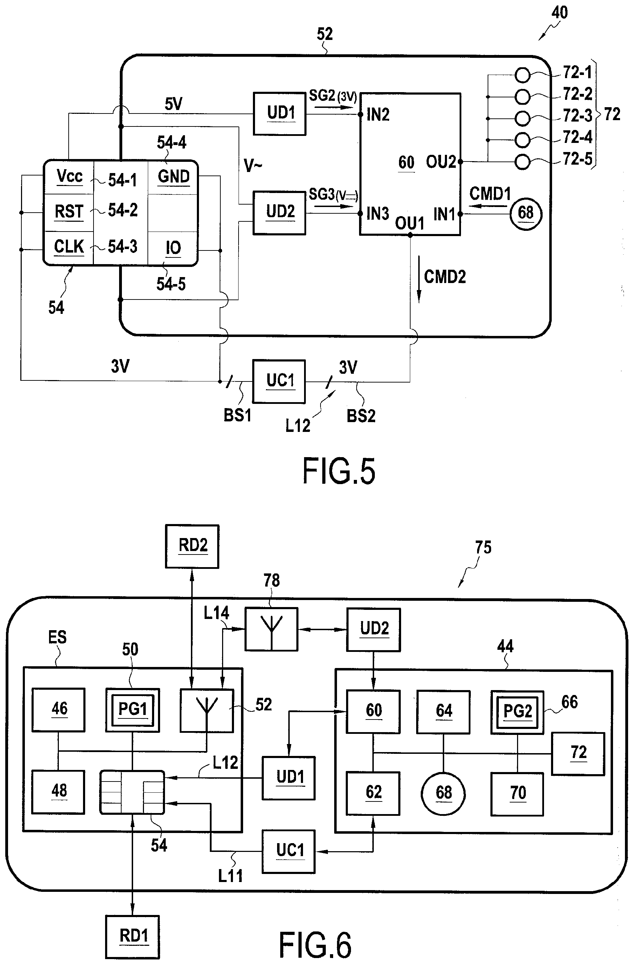

La liaison L11 comprend un bus qui connecte au moins un contact externe 54 prédéfini à l'interface 62 de l'unité de traitement (comme décrit plus en détail en référence à la **figure 5**).

Dans cet exemple, les contacts externes 54 sont conformes à la norme ISO 7816. La liaison L11 comprend un bus connectant l'unité de traitement 60 à chacun des contacts externes 54 définis en tant que Vcc (alimentation), RST (Reset), CLK (Clock), GRD (Ground) et IO (Input/Output) selon la norme ISO 7816.

L'unité de traitement 60 est ainsi apte à envoyer une ou plusieurs commandes à l'élément sécurisé ES via au moins l'un des contacts externes 54, à savoir au moins l'un des contacts Vcc, RST, CLK, GRD et IO dans cet exemple. A ce titre, l'unité de traitement 60 se comporte vis-à-vis de l'élément sécurisé ES comme un lecteur externe (bien que l'élément ES soit interne à la carte à puce 40) dans la mesure où l'unité de traitement 44 coopère avec les contacts externes 54 pour communiquer avec l'élément sécurisé ES.

On comprendra toutefois que le cas particulier envisagé ici ne constitue qu'un exemple non limitatif de l'invention et que d'autres exemples sont envisageables dans le cadre de l'invention. D'autres exemples de connexion aux contacts externes 54 sont envisageables.

L'actionneur 68 peut être un bouton ou tous autres actionneurs permettant à un utilisateur d'envoyer une instruction à l'unité de traitement 44.

La batterie 70 alimente électriquement le microprocesseur 60.

On suppose ici que l'unité de traitement 44 comprend une pluralité de LEDs 72 contrôlées par le microprocesseur 60.

Comme expliqué par la suite, les caractéristiques de l'unité de traitement au sens de l'invention peuvent varier selon le cas sans départir du cadre de l'invention.

Dans l'exemple considéré ici, à partir de l'actionneur 68, l'utilisateur est capable de sélectionner l'un parmi une pluralité de modes de fonctionnement (ou applications) disponibles. On suppose dans cet exemple que 4 modes de fonctionnement (ou applications) M1, M2, M3 et M4 sont sélectionnables par l'utilisateur. D'autres exemples sont naturellement envisageables.

En réponse à la commande de sélection de l'utilisateur, le microprocesseur 60 est configuré pour afficher, à partir des LEDs 72, le mode sélectionné (ou l'application sélectionnée) et pour envoyer une commande de sélection (de type APDU dans cet exemple) à l'élément sécurisé ES pour commander à ce dernier de fonctionner selon le mode sélectionné (ou l'application sélectionnée) par l'utilisateur.

Pour ce faire, la commande APDU est transmise par l'interface 62 via la liaison interne L11 à l'élément sécurisé ES. Cette commande de sélection comporte par exemple un identifiant du mode M1-M4 sélectionné par l'utilisateur. En réponse à cette commande, le microprocesseur ES est configuré pour sélectionner le mode de fonctionnement M1-M4 approprié.

La sélection du mode de fonctionnement décrite ci-dessus ne constitue qu'un exemple de fonction pouvant être mise en œuvre par l'unité de traitement 44 en coopération avec l'élément sécurisé ES. L'unité de traitement au sens de l'invention n'est pas limitée à la mise en œuvre de cette fonction particulière.

Conformément à ce mode de réalisation particulier, la carte à puce 40 comprend en outre une unité de contrôle UC1, une première unité de détection UD1 et une deuxième unité de détection UD2.

L'unité de contrôle UC1 est configurée pour bloquer ou non l'envoi, via au moins un contact externe 54 prédéfini parmi la pluralité de contacts externes 54, de toutes commandes (ou données) de l'unité de traitement 44 à l'élément sécurisée ES.

Dans cet exemple, l'unité de contrôle UC1 est configurée pour bloquer si besoin l'envoi, via chacun des contacts externes 54 définis en tant que Vcc, RST, CLK, GND, IO, de chaque commande de l'unité de traitement 44 à l'élément sécurisé ES. Comme expliqué plus en détail par la suite, l'unité de contrôle 60 est configurée pour réaliser un tel blocage tant qu'une communication externe est en cours entre l'élément sécurisé ES et un lecteur externe à la carte à puce 40.

Dans l'exemple considéré ici, l'unité de contrôle UC1 est contrôlée par l'unité de traitement 44, et plus particulièrement par le microprocesseur 60, bien que d'autres modes de réalisation soient envisageables.

L'unité de contrôle UC1 est ici externe à l'unité de traitement 44. On comprendra toutefois que d'autres variantes de réalisation sont envisageables. Alternativement, l'unité de contrôle UC1 peut être incluse dans l'unité de traitement 44. L'unité de contrôle UC1 peut par exemple être mise en oeuvre par l'interface de communication 62, ou par le microprocesseur 60 exécutant des instructions du programme PG2.

Toujours dans l'exemple considéré ici, l'unité de contrôle UC1 est un commutateur (ou interrupteur) apte à commuter entre un état bloquant et un état passant de façon à contrôler la communication au travers de la liaison L11. L'utilisation d'un tel commutateur n'est toutefois pas indispensable pour mettre en oeuvre la fonction de blocage de l'invention, notamment lorsque l'unité de contrôle UC1 est mise en œuvre par le microprocesseur 60 lui-même. On peut par exemple envisager aussi une mise en œuvre logicielle d'un tel blocage des commandes de l'unité de traitement.

A l'état bloquant, l'unité de contrôle UC1 isole électriquement l'unité de traitement 44 de l'élément sécurisé ES empêchant ainsi toute communication entre l'unité de traitement 44 et l'élément sécurisé ES via les contacts externes 54. Fixer l'unité de contrôle UC1 à l'état bloquant permet de bloquer l'envoi de toutes commandes de l'unité de traitement 44 à l'élément sécurisé ES via au moins un contact externe 54 prédéfini, à savoir les contacts externes Vcc, RST, CLK, GND, IO dans l'exemple décrit ici. Comme déjà indiqué, le blocage de l'invention peut être mis en œuvre plus généralement sur au moins l'un quelconque des contacts externes de l'élément sécurisé ES, de préférence ceux sur lesquels l'élément sécurisé ES est susceptible de recevoir une commande interne (provenant de l'unité de traitement 44 dans cet exemple) pouvant rentrer en conflit avec une commande externe provenant d'un lecteur externe à la carte à puce 40.

A l'état passant, l'unité de contrôle UC1 autorise la communication entre l'unité de traitement 44 et l'élément sécurisé ES et laisse en particulier passer les commandes de l'unité de traitement 44 vers l'élément sécurisé via ledit au moins un contact prédéfini (i.e. les contacts externes Vcc, RST, CLK, GND, IO dans cet exemple).

Par ailleurs, la première unité de détection UD1 est apte à détecter si une communication par contact est en cours en mode avec contact entre l'élément sécurisé ES et un lecteur externe RD1. Pour ce faire, dans cet exemple, l'unité de détection UD1 est connectée électriquement à au moins l'un des contacts externes 54 de l'élément sécurisé ES de façon à pouvoir déterminer lorsqu'une communication est en cours en mode avec contact entre la carte à puce 40 et le lecteur externe RD1.

Le protocole de communication utilisé par la carte à puce 40 pour coopérer en mode avec contact le lecteur externe RD1 peut varier selon le cas. Dans un mode de réalisation particulier, l'élément sécurisé ES communique par contact selon le protocole USB ou SWP avec le lecteur externe RD1.

Dans l'exemple envisagé ici, la première unité de détection UD1 est connectée électriquement à l'un des contacts externes 54, dit contact d'alimentation. Ce contact d'alimentation Vcc est destiné à recevoir une alimentation électrique du lecteur externe RD1 lorsque l'élément sécurisé ES coopère en mode avec contact avec ledit lecteur externe RD1 de façon à alimenter électriquement l'élément sécurisé ES. Connecter la première unité de détection UD1 au contact d'alimentation permet avantageusement de détecter toutes communications par contact entre l'élément sécurisé ES et un lecteur externe, y compris selon le protocole SWP ou USB par exemple.

Comme expliqué également en référence à la **figure 5****,** les contacts externes 54 sont, dans cet exemple, conformes à la norme ISO 7816 et le contact d'alimentation mentionné ci-dessus est le contact défini en tant que Vcc par la norme ISO 7816.

Typiquement, lorsqu'une communication par contact est mise en œuvre entre l'élément sécurisé ES et le lecteur externe RD1, une alimentation est fournie par le lecteur externe RD1 sur le contact d'alimentation Vcc de l'élément sécurisé ES. Le contact d'alimentation Vcc reste ainsi à un niveau haut tant que la transaction est en cours entre l'élément sécurisé ES et le lecteur externe RD1. Détecter qu'une alimentation électrique est reçue sur le contact d'alimentation Vcc permet d'en déduire qu'une communication par contact est en cours.

On notera que d'autres alternatives sont possibles selon lesquelles l'unité de détection UD1 surveille l'état électrique d'au moins un autre contact externe que le contact d'alimentation Vcc afin de déterminer si une communication par contact est en cours entre l'élément sécurisé ES et un lecteur externe.

De plus, la deuxième unité de détection UD2 est apte à détecter si une communication sans contact est en cours en mode sans contact entre l'élément sécurisé ES et un lecteur externe RD2.

Dans ce premier mode de réalisation, l'unité de détection UD2 est connectée électriquement à l'antenne RF 42 de façon à pouvoir détecter un signal RF émis ou reçu par l'antenne RF 52, ce signal RF indiquant qu'une communication sans contact est en cours entre l'élément sécurisé ES et le lecteur externe RD2.

On notera que, dans l'exemple décrit ici, les unités de détection UD1 et UD2 sont externes à l'unité de traitement 44. Alternativement, il est possible de mettre en œuvre au moins l'une de ces unités de détection dans l'unité de traitement 44, voire dans le microprocesseur 60 lui-même.

Le déroulement d'un procédé de blocage mis en œuvre par la carte à puce 40 selon un mode de réalisation particulier est à présent décrit en référence à la **figure 4****.** Plus précisément, le microprocesseur 60 de l'unité de traitement 44 met en œuvre un procédé de blocage en exécutant le programme PG2 en interaction avec les unités UC1, UD1 et UD2.

On suppose ici qu'une étape d'initialisation S2 de l'unité de traitement 44 déclenche le début de l'exécution d'un procédé de blocage dans la carte à puce 40. Ce déclenchement peut résulter par exemple de la mise sous alimentation de l'unité de traitement 44 et/ou de la détection qu'au moins un critère prédéfini est satisfait (réception d'une commande, date, heure...).

Au cours d'une étape S4, le microprocesseur 60 détermine :
(1) si une première communication est en cours en mode avec contact entre l'élément sécurisé ES et un quelconque lecteur externe ; et
(2) si une deuxième communication est en cours en mode sans contact entre l'élément sécurisé ES et un quelconque lecteur externe.

Plus spécifiquement, dans cet exemple, le microprocesseur 60 vérifie (1) si une première communication par contact est en cours à partir de la première unité de détection UD1 et vérifie (2) si une deuxième communication sans contact est en cours à partir de la deuxième unité de détection UD2.

Ces deux vérifications (1) et (2) sont par exemple réalisées à l'étape S4 de façon continue ou à intervalle de temps régulier. Ces vérifications (1) et (2) peuvent par ailleurs être réalisées simultanément ou l'une après l'autre selon le cas.

Tant qu'aucune communication externe (avec ou sans contact) n'est détectée entre l'élément sécurisé ES et un lecteur externe (RD1, RD2) à la carte 40, l'unité de contrôle UC1 reste à l'état passant de façon à ce que chaque commande de l'unité de traitement 44 puisse parvenir à l'élément sécurisé ES. Dans l'exemple considéré ici, c'est le microprocesseur 60 qui maintient l'unité de contrôle UC1 à l'état passant.

On notera que, dans cette mise en œuvre particulière, lorsque l'unité de traitement 44 envoie une commande à l'élément sécurisé ES, l'unité de traitement 44 est configurée pour attendre une période de temps prédéfini à compter de cet envoi avant de vérifier à nouveau si une communication externe est en cours entre l'élément sécurisé ES et un lecteur externe. Le temps prédéfini mentionné ci-avant est choisi de sorte à ce que, pendant qu'une commande de l'unité de traitement 44 est en train d'être envoyée, aucune collision n'est détectée entre une commande interne et une commande externe. Cette configuration permet d'éviter qu'une commande de l'unité de traitement 44 envoyée sur le contact externe Vcc de l'élément sécurisé ES ne soit interprétée par l'unité de détection UD1 comme étant une communication par contact en cours entre l'élément sécurisé ES et un lecteur externe. Le temps prédéfini mentionné ci-dessus est par exemple inférieur ou égal à 100 ms (e.g. égal à 100 ms).

Si, en revanche, le microprocesseur 60 détecte (S4), à partir des unités UD1 et UD2, qu'une communication par contact ou qu'une communication sans contact est en cours entre l'élément sécurisé ES et un lecteur externe à la carte à puce 40, le procédé procède à l'étape S6.

Au cours de l'étape S6, le microprocesseur 60 configure l'unité de contrôle UC1 à l'état bloquant afin de bloquer l'envoi, sur au moins un contact externe prédéfini 54 (à savoir les contacts externes Vcc, RST, CLK, GND et IO dans cet exemple), de toutes commandes de l'unité de traitement 44 vers l'élément sécurisé ES, et ce tant qu'au moins l'une parmi une communication sans contact et une communication par contact est détectée comme étant en cours entre l'élément sécurisé ES et un lecteur externe.

Comme déjà indiqué, l'invention s'applique également à une carte à puce (ou plus généralement à un dispositif électronique) qui est apte à fonctionner en mode avec contact mais pas en mode sans contact. Selon une variante de réalisation, la carte 40 ne comprend pas l'antenne RF 52. Dans ce cas, l'unité de détection UD2 n'est pas nécessaire. Selon cette variante, au cours de l'étape S4, le microprocesseur 60 réalise uniquement la vérification (1) définie ci-dessus pour déterminer si une communication par contact est en cours entre l'élément sécurisé ES et un quelconque lecteur externe. Si cette vérification (1) est positive, le procédé passe à l'étape S6. En cours de l'étape S6, le microprocesseur 60 configure l'unité de contrôle UC1 à l'état bloquant afin de bloquer l'envoi, sur au moins un contact externe prédéfini 54 (à savoir les contacts externes Vcc, RST, CLK, GND et IO dans cet exemple), de toutes commandes de l'unité de traitement 44 vers l'élément sécurisé ES, et ce tant qu'une communication par contact est détectée comme étant en cours entre l'élément sécurisé ES et un lecteur externe.

L'invention est avantageuse en ce qu'elle permet d'éviter tous conflits (ou collision) au niveau de l'élément sécurisé entre une commande dite « externe » reçue d'un lecteur externe à la carte à puce en mode avec contact (ou éventuellement en mode sans contact), et une commande dite « interne » reçue d'une unité de traitement interne à la carte à puce.

Comme indiqué précédemment, l'élément sécurisé d'une carte à puce conventionnelle n'est pas optimisé pour gérer convenablement à la fois des commandes provenant d'un lecteur externe (en mode avec et/ou sans contact) et des commandes provenant d'une unité de traitement (ou module électronique) interne à la carte. Dans certains cas, l'élément sécurisé peut rencontrer des difficultés pour prendre en compte des commandes provenant de ces différentes sources, causant le cas échéant des conflits néfastes pour le bon fonctionnement de la carte à puce.

L'invention permet d'éviter que se produise en particulier une situation conflictuelle dans laquelle une commande interne et une commande externe sont reçues simultanément par l'élément sécurisé de la carte à puce.

L'invention est également avantageuse en ce qu'elle peut être mise en œuvre sans que cela affecte la structure et le fonctionnement de l'élément sécurisé de la carte à puce.

En outre, dans l'exemple considéré ci-avant, le microprocesseur 60 configure à l'étape S6 l'unité de contrôle UC1 à l'état bloquant de sorte à isoler électriquement l'élément de sécurité ES de l'unité de traitement 44. Bien que d'autres modes de réalisation soient envisageables, une telle isolation électrique est avantageuse en ce que cela permet notamment d'éviter qu'une communication par contact entre l'élément sécurisé ES et un lecteur externe soit perturbée par l'unité de traitement 44.

Par ailleurs, dans l'exemple d'écrit ici, le microprocesseur 60 envoie à partir de l'interface 62 une commande APDU à l'élément sécurisé ES via au moins un contact externe 54 (en utilisant la liaison interne L11). La nature et le contenu de cette commande APDU peuvent varier selon le cas. Dans l'exemple décrit ici, la commande APDU est une commande de sélection indiquant à l'élément sécurisé ES un mode de fonctionnement (ou une application) M1, M2, M3 ou M4 qu'il doit mettre en oeuvre. D'autres types de commandes sont bien entendu envisageables.

La **figure 5** représente un exemple de mise en œuvre de la carte à puce 40 conforme au premier mode de réalisation. Certains éléments de la carte à puce 40 sont omis en **figure 5** par souci de simplicité.

Le microprocesseur 46 (non représenté) de l'élément sécurisé ES est reliée à l'antenne RF 52 de façon à pouvoir communiquer en mode sans contact avec le lecteur externe RD2.

Par ailleurs, le microprocesseur 60 comprend ici :
- une entrée IN1 connectée à l'actionneur 68 de façon à pouvoir recevoir une commande CMD1 d'un utilisateur via l'actionneur 68 ;
- une entrée IN2 connectée à la sortie de l'unité de détection UD1, l'entrée IN2 étant apte recevoir un signal SG2 de l'unité de détection UD1 indiquant si une communication par contact est en cours entre l'élément sécurisé ES et un lecteur externe ;

- une entrée IN3 connectée à la sortie de l'unité de détection UD2, l'entrée IN3 étant apte à recevoir un signal SG3 de l'unité de détection UD2 indiquant si une communication sans contact est en cours entre l'élément sécurisé ES et un lecteur externe ; et
- une sortie OU1 par laquelle le microprocesseur 60 peut envoyer une commande CMD2 à l'élément sécurisé ES ;
- une sortie OU2 par laquelle le microprocesseur 60 peut contrôler l'état des LEDs 72-1 à 72-5.

Dans cet exemple, l'unité de contrôle UC1 est connectée via un bus BS1 de connexions filaires à au moins un contact externe 54 prédéfini, à savoir les contacts externes prédéfinis 54-1, 54-2, 54-3, 54-4 et 54-5 (notés collectivement 54) de l'élément sécurisé ES dans cet exemple particulier.

Comme indiqué ci-avant, les contacts externes prédéfinis 54-1, 54-2, 54-3, 54-4 et 54-5 correspondent ici respectivement aux contacts Vcc, RST, CLK, GND et IO tels que définis dans la norme ISO 7816. Par simplicité, les autres contacts définis par la norme ISO 7816 ne sont pas représentés sur la **figure 5****.**

De plus, l'unité de contrôle UC1 est connectée via un bus BS2 à la sortie OU1 du microprocesseur 60. Le microprocesseur 60 peut ainsi transmettre via les bus BS1 et BS2 une commande CMD2 (de type APDU par exemple) à l'un quelconque des contacts externes 54-1 à 54-5.

Comme déjà décrit, l'unité de contrôle UC1 se comporte dans cet exemple comme un commutateur pouvant se mettre dans un état bloquant ou dans un état passant sous le contrôle du processeur 60.

Par ailleurs, l'unité de détection UD1 est connectée électriquement au contact externe 54-1 (Vcc) de sorte à pouvoir recevoir en entrée un signal (e.g. en tension) indiquant si une alimentation électrique d'un lecteur externe RD1 est reçue par contact par l'élément sécurisée ES. L'unité de détection UD1 est apte à envoyer sur l'entrée IN2 du microprocesseur 60 un signal SG2 indiquant si une communication par contact est en cours entre l'élément sécurisé ES et le lecteur externe RD1.

Dans cet exemple, l'unité de détection UD1 agit en outre comme un convertisseur de tension de façon à convertir un signal reçue du contact externe 54-1 (Vcc) d'une première tension (e.g. 5V) en une deuxième tension (e.g. 3V). L'unité de détection UD1 est de préférence mise en œuvre de façon à s'adapter aux spécifications du microprocesseur 60 et afin notamment de protéger le microprocesseur 60.

Le processeur 60 détermine qu'une communication par contact est en cours entre l'élément sécurisé ES et le lecteur externe RD1 seulement si la tension du signal SG2 reçu est au moins égale à une première valeur seuil prédéterminée.

De plus, l'unité de détection UD2 est connectée électriquement à l'antenne RF 52 de sorte à pouvoir recevoir en entrée un signal indiquant si une communication sans contact est en cours entre l'élément sécurisé ES et un lecteur externe RD2. L'unité de détection UD2 est apte à envoyer sur l'entrée IN3 du microprocesseur 60 un signal SG3 indiquant si une communication sans contact est en cours entre l'élément sécurisé ES et un lecteur externe RD.

Dans cet exemple, l'unité de détection UD2 convertit le signal alternatif (e.g. en tension) collecté le cas échéant sur l'antenne RF 52 en un signal continu SG3 (e.g. en tension) adapté pour être traité par le microprocesseur 60. La manière de réaliser une telle conversion est connue de l'homme du métier et ne sera donc pas décrit en détail dans le cas présent (e.g. détection d'enveloppe etc.).

Toujours dans cet exemple, le microprocesseur 60 détermine qu'une communication sans contact est en cours entre l'élément sécurisé ES et le lecteur externe RD2 seulement si la tension du signal SG3 reçu est au moins égale à une deuxième valeur seuil prédéterminée.

Comme déjà indiqué, on notera que diverses variantes de réalisation sont envisageables dans le cadre de l'invention.

On peut par exemple envisager de bloquer l'envoi de toutes commandes de l'unité de traitement 44 à l'élément sécurisé ES sans pour autant isoler électriquement l'élément sécurisé ES vis-à-vis de l'unité de traitement lors dudit blocage.

Selon une variante de réalisation, l'unité de contrôle UC1 est mise en œuvre dans le microprocesseur 60 lui-même. Autrement dit, le microprocesseur 60 est configuré pour bloquer l'envoi, via au moins un contact externe 54 prédéfini (i.e. les contacts Vcc, RST, CLK, GND et IO selon la norme ISO 7816, dans cet exemple), de toutes commandes vers l'élément sécurisé ES tant qu'une communication par contact ou qu'une communication sans contact est en cours entre l'élément sécurisé ES et un lecteur externe.

En cas de détection qu'une communication par contact ou qu'une communication sans contact est en cours entre l'élément sécurisé ES et un lecteur externe, l'unité de traitement 44 (et plus particulièrement le microprocesseur 60) peut par exemple être configuré pour ne pas générer de commandes à destination de l'élément sécurisé ES, ou pour différer l'envoi de toutes commandes qu'il pourrait générer à destination de l'élément sécurisé ES (dans ce cas, chaque commande différée est stockée en mémoire) et ce, tant qu'une communication est en cours avec ou sans contact entre l'élément sécurisé ES et un lecteur externe.

Si l'élément sécurisé ES n'est pas destiné à fonctionner en mode sans contact, le microprocesseur 60 peut alternativement être configuré pour mettre en œuvre le blocage de l'invention tant qu'une communication par contact est en cours entre l'élément sécurisé ES et un lecteur externe.

Le blocage des commandes de l'unité de traitement 44 peuvent donc se faire en interne dans l'unité de traitement 44 elle-même et/ou de façon externe à l'unité de traitement 44 (typiquement au niveau de la liaison L11).

Par ailleurs, dans les exemples de réalisation précédemment décrits, c'est le microprocesseur 60 qui détermine à partir des signaux des unités de détection UD1 et UD2 si une communication en mode avec contact ou en mode sans contact est en cours entre l'élément sécurisé ES et un lecteur externe, et qui contrôle l'état (bloquant ou passant) de l'unité de contrôle UC1. On comprendra qu'au moins l'une de ces opérations peut être réalisée par une quelconque unité de commande (e.g. un microprocesseur) interne à la carte à puce située dans ou hors de l'unité de traitement 44.

Selon une variante de réalisation, l'unité de traitement 60 est en outre configurée pour contrôler l'état d'un voyant lumineux (non représenté), tel qu'une LED par exemple, dont est équipé la carte à puce 52, ce contrôle étant réalisé en fonction de la détection ou non qu'une communication externe est en cours entre l'élément sécurisé ES et un lecteur externe. L'unité de traitement 60 contrôle par exemple un tel voyant lumineux afin que son état (l'intensité lumineuse, la fréquence de clignotement etc.) indique à l'utilisateur si une communication externe est en cours entre l'élément sécurisé ES et un lecteur externe.

La **figure 6** représente une carte à puce 75 selon un deuxième mode de réalisation de l'invention. La carte à puce 75 diffère uniquement de la carte à puce 40 représenté en **figure 3** dans le fait qu'une antenne RF additionnelle 78 est incluse dans la carte 75 afin de détecter si une communication sans contact est en cours entre l'élément sécurisé ES et un lecteur externe RD2.

Plus spécifiquement, la deuxième unité de détection UD2 est apte, à partir de l'antenne RF 78 additionnelle, à détecter un signal RF émis ou reçu par la première antenne RF 52 indiquant qu'une communication en mode sans contact est en cours entre l'élément sécurisé ES et le lecteur externe RD2.

Pour ce faire, les antennes RF 52 et 78 sont ici couplées électromagnétiquement (e.g. par induction ; liaison L14) de façon à ce que toute activité de communication au niveau de l'antenne RF 52 puisse être détectée à partir de l'antenne RF 78. Tout signal RF collecté par l'antenne RF 78 est transmis à l'unité de détection UD2 qui fonctionne comme déjà décrit précédemment en référence au premier mode de réalisation.

L'utilisation de cette antenne RF 78 additionnelle est avantageuse en ce qu'elle permet notamment d'éviter qu'une communication sans contact entre l'élément sécurisé ES et un lecteur externe RD2 soit perturbée par la deuxième unité de détection UD2.

Comme déjà expliqué, il est nécessaire dans le cadre de l'invention de bloquer l'envoi de toutes commandes de l'unité de traitement (44) à l'élément sécurisé (ES) via au moins un contact externe prédéfini lorsqu'une communication en cours par contact ou sans contact est détectée entre l'élément sécurisé (ES) et un lecteur externe. A noter que ce blocage peut être unidirectionnel de sorte que, lorsque le blocage est mis en oeuvre, des commandes peuvent malgré tout transiter dans l'autre sens, c'est-à-dire de l'élément sécurisé (ES) à l'unité de traitement (44). Alternativement, ce blocage peut être bidirectionnel de sorte que toute communication est interdite dans les deux sens entre l'élément sécurisé (ES) et l'unité de traitement (44).

On comprendra dans le présent exposé qu'une commande au sens de l'invention peut être un quelconque message (ou une quelconque donnée) de l'unité de traitement destinée à l'élément sécurisé.

Par ailleurs, selon une variante, le blocage des commandes de l'unité de traitement à l'élément sécurisé est maintenu pendant un temps prédéfini à compter de l'instant où plus aucune communication en cours avec ou sans contact n'est détectée entre l'élément sécurisé ES et l'unité de traitement.

Comme déjà indiqué, la nature et les éléments constitutifs de l'unité de traitement au sens de l'invention peuvent varier selon le cas. Dans les exemples considérés ci-avant, l'unité de traitement 44 comprend en particulier des mémoires 64 et 66, un actionneur 68, une batterie 70, et des LEDs 72. L'unité de traitement 44 est apte à réaliser, en coopération avec l'élément sécurisé ES, une sélection d'une application ou d'un mode de fonctionnement à exécuter par l'élément sécurisé ES, l'unité de traitement 44 étant apte à réaliser cette sélection à partir par exemple d'une instruction d'un utilisateur reçue via l'actionneur 68. On comprendra toutefois que des unités de traitement destinées à réaliser d'autres fonctions peuvent être envisagées dans le cadre de l'invention.

Ainsi, selon une variante de réalisation, l'unité de traitement 44 est apte à obtenir une information à partir d'une donnée reçue de l'élément sécurisé ES et à commander un affichage de l'information en utilisant une unité d'affichage de la carte à puce 44. Pour ce faire, l'unité de traitement 44 reçoit par exemple ladite donnée de l'élément sécurisée via la liaison L11. L'unité d'affichage peut comprendre par exemple un écran d'affichage apte à afficher une information utile à l'utilisateur telle qu'un montant d'une transaction ou d'un total d'unités de compte, ou encore un indicateur d'une monnaie sélectionnée par l'utilisateur. Au cours de ce procédé d'affichage, au moins une commande peut le cas échéant être envoyée par l'unité de traitement à l'élément sécurisé, sous réserve que le blocage de l'invention ne soit pas déclenché.

D'autres variantes de l'unité de traitement aptes à communiquer avec l'élément sécurisé sont bien entendu envisageables dans le cadre de l'invention.

Comme déjà indiqué, l'invention s'applique également aux cartes à puce fonctionnant exclusivement en mode avec contact. Dans ce cas, seule l'existence d'une communication par contact est surveillée afin de déterminer s'il faut ou non déclencher le blocage de l'invention. Ainsi, tant qu'une communication en cours par contact est détectée, tous envois, via au moins un contact externe prédéfini (par exemple Vcc, RST, CLK, GND et IO selon la norme ISO 7816), d'une commande de l'unité de traitement vers l'élément sécurisé sont bloqués.

Comme déjà indiqué, l'invention ne se limite pas aux cartes à puce mais s'applique plus généralement à tous dispositifs électroniques aptes à coopérer avec un lecteur externe selon un mode avec contact, et aussi le cas échéant selon un mode sans contact.

## Revendications

1. Dispositif électronique (40 ; 75) comprenant :
- un élément sécurisé (ES) comprenant une pluralité de contacts (54), ledit élément sécurisé étant apte à coopérer avec un premier lecteur externe (RD1) audit dispositif électronique selon un mode avec contact en utilisant au moins l'un desdits contacts ;
- une unité de traitement (44) externe à l'élément sécurisé, ladite unité de traitement étant apte à envoyer une commande (CMD2) à l'élément sécurisé (ES) via au moins l'un desdits contacts (54) ;
- une première unité de détection (UD1) apte à détecter si une communication par contact est en cours en mode avec contact entre l'élément sécurisé (ES) et le premier lecteur externe (RD1) ; et
- une unité de contrôle (UC1) configurée pour bloquer l'envoi, via au moins un contact prédéfini parmi ladite pluralité de contacts, de chaque commande (CMD2) de l'unité de traitement (44) à l'élément sécurisé (ES) tant qu'une dite communication par contact est en cours,
**caractérisé en ce que** la première unité de détection (UD1) est apte à convertir une première tension détectée sur un desdits contacts externes, dit contact d'alimentation (54-1), en une deuxième tension différente de la première tension, et dans lequel l'unité de traitement (44) est configurée pour déterminer qu'une dite communication par contact est en cours entre l'élément sécurisé (ES) et le premier lecteur externe (RD1) seulement si la deuxième tension est au moins égale à une première valeur seuil prédéterminée.

2. Dispositif électronique selon la revendication 1, dans lequel lesdits contacts (54) sont conformes à la norme ISO 7816.

3. Dispositif électronique selon la revendication 2, ledit au moins un contact prédéfini comprend les contacts (54-1, 54-2, 54-3, 54-4) définis en tant que Vcc, RST, CLK, GND et IO par ladite norme ISO 7816.

4. Dispositif électronique selon l'une quelconque des revendications 1 à 3, dans lequel l'unité de contrôle (UC1) est configurée pour bloquer l'envoi, via chacun desdits contacts (54) de l'élément sécurisé (ES), de chaque commande de l'unité de traitement à l'élément sécurisé tant qu'une dite communication par contact est en cours.

5. Dispositif électronique selon l'une quelconque des revendications 1 à 4, dans lequel la première unité de détection (UD1) est connectée à l'un (54-1) desdits contacts externes, dit contact d'alimentation, destiné à recevoir une alimentation électrique lorsque l'élément sécurisé (ES) coopère en mode avec contact avec le premier lecteur externe (RD1) afin d'alimenter électriquement ledit élément sécurisé.

6. Dispositif électronique selon l'une quelconque des revendications 1 à 5, dans lequel l'élément sécurisé (ES) comprend une première antenne radiofréquence (52), ledit élément sécurisé étant apte à coopérer avec un deuxième lecteur (RD2) externe audit dispositif électronique selon un mode sans contact en utilisant ladite première antenne radiofréquence,
ledit dispositif électronique comprenant :
- une deuxième unité de détection (UD2) apte à détecter si une communication sans contact est en cours en mode sans contact entre l'élément sécurisé (ES) et le deuxième lecteur externe (RD2) ;
l'unité de contrôle (UC1) étant configurée pour bloquer l'envoi, via ledit au moins un contact prédéfini, de chaque commande (CMD2) de l'unité de traitement (44) à l'élément sécurisé (ES) tant qu'au moins l'une parmi une dite communication par contact et une dite communication sans contact est en cours.

7. Dispositif électronique selon la revendication 6, comprenant une deuxième antenne radiofréquence (78) isolée de la première antenne radiofréquence (52), la deuxième unité de détection (UD2) étant apte, à partir de la deuxième antenne radiofréquence (78), à détecter un signal radiofréquence émis ou reçu par la première antenne radiofréquence (52) indiquant qu'une dite communication sans contact est en cours entre l'élément sécurisé (ES) et le deuxième lecteur externe (RD2).

8. Dispositif électronique selon la revendication 6 ou 7, dans lequel la deuxième unité de détection (UD2) est apte à convertir une tension alternative obtenue à partir de la première antenne radiofréquence (52) en une tension continue.

9. Dispositif électronique selon la revendication 8, dans lequel l'unité de traitement (44) est configurée pour déterminer qu'une dite communication sans contact est en cours seulement si la tension continue est au moins égale à une deuxième valeur seuil prédéterminée.

10. Dispositif électronique selon l'une quelconque des revendications 1 à 9, dans lequel l'unité de contrôle (UC1) comprend un commutateur à l'interface entre l'élément sécurisé (ES) et l'unité de traitement (44), ledit commutateur étant apte à commuter entre un état bloquant et un état passant,
le commutateur étant configuré pour se fixer à l'état bloquant lorsque l'unité de contrôle bloque ledit envoi de chaque commande de l'unité de traitement via ledit au moins un contact prédéfini, de sorte à isoler électriquement l'élément sécurisé (ES) vis-à-vis de l'unité de traitement (44).

11. Dispositif électronique selon l'une quelconque des revendications 1 à 10, dans lequel l'unité de traitement (44) est apte à réaliser, en coopération avec l'élément sécurisé (ES), une sélection d'une application à exécuter par l'élément sécurisé,
l'unité de traitement étant apte à réaliser cette sélection à partir d'une instruction d'un utilisateur reçue via un actionneur (68) du dispositif électronique.

12. Dispositif électronique selon l'une quelconque des revendications 1 à 11, dans lequel l'unité de traitement (44) est apte à obtenir une information à partir d'une donnée reçue de l'élément sécurisé (ES) et à commander un affichage de ladite information en utilisant une unité d'affichage du dispositif électronique.

13. Dispositif électronique selon l'une quelconque des revendications 1 à 12, dans lequel ledit disposit électronique (40 ; 75) est une carte à puce.

14. Procédé de blocage mis en œuvre par un dispositif électronique (40 ; 75) comprenant :
- un élément sécurisé (ES) comprenant une pluralité de contacts (54), ledit élément sécurisé étant apte à coopérer avec un premier lecteur externe (RD1) audit dispositif électronique selon un mode avec contact en utilisant au moins l'un desdits contacts ;
- une unité de traitement (44) externe à l'élément sécurisé (ES), ladite unité de traitement étant apte à envoyer une commande (CMD2) à l'élément sécurisé via au moins l'un desdits contacts (54) ;
- une première vérification (S4) pour déterminer si une communication par contact est en cours en mode avec contact entre l'élément sécurisé et le premier lecteur externe ; et
- le blocage (S6) de l'envoi, via au moins un contact prédéfini parmi ladite pluralité de contacts (54), de chaque commande de l'unité de traitement (44) à l'élément sécurisé (ES) tant qu'une dite communication par contact est en cours,
**caractérisé en ce que** la première vérification comprend une conversion d'une première tension détectée sur le contact d'alimentation (54-1) en une deuxième tension différente de la première tension, et
dans lequel, l'unité de traitement (44) détermine qu'une dite communication par contact est en cours entre l'élément sécurisé (ES) et le premier lecteur externe (RD1) seulement si la deuxième tension est au moins égale à une première valeur seuil prédéterminée.

15. Procédé de blocage selon la revendication 14, dans lequel l'élément sécurisé (ES) comprend une première antenne radiofréquence (52), ledit élément sécurisé étant apte à coopérer avec un deuxième lecteur (RD2) externe audit dispositif électronique selon un mode sans contact en utilisant ladite première antenne radiofréquence,
ledit dispositif électronique comprenant :
- une deuxième vérification (S4) pour déterminer si une communication sans contact est en cours en mode sans contact entre l'élément sécurisé (ES) et le deuxième lecteur externe (RD2) ; et
- le blocage (S6) de l'envoi, via ledit au moins un contact prédéfini, de chaque commande de l'unité de traitement à l'élément sécurisé tant qu'au moins l'une parmi une dite communication par contact et une dite communication sans contact est en cours.

16. Programme d'ordinateur (PG2) comportant des instructions pour l'exécution des étapes d'un procédé de blocage selon la revendication 14 ou 15 orsque ledit programme est exécuté par un ordinateur.

17. Support d'enregistrement lisible par un ordinateur sur lequel est enregistré un programme d'ordinateur (PG1) comprenant des instructions pour l'exécution des étapes d'un procédé de blocage selon la revendication 14 ou 15.

## Patentansprüche

1. Elektronische Vorrichtung (40; 75), umfassend:
- ein Sicherheitselement (ES), das mehrere Kontakte (54) umfasst, wobei das Sicherheitselement geeignet ist, mit einem ersten externen Lesegerät (RD1) der elektronischen Vorrichtung gemäß einem Modus mit Kontakt unter Verwendung von zumindest einem der Kontakte zu kooperieren,
- eine Verarbeitungseinheit (44) außerhalb des Sicherheitselements, wobei die Verarbeitungseinheit geeignet ist, über zumindest einen der Kontakte (54) einen Befehl (CMD2) an das Sicherheitselement (ES) zu senden,
- eine erste Erfassungseinheit (UD1), die geeignet ist, zu erfassen, ob eine Kommunikation durch Kontakt im Modus mit Kontakt zwischen dem Sicherheitselement (ES) und dem ersten externen Lesegerät (RD1) im Gange ist, und
- eine Steuereinheit (UC1), die dazu ausgestaltet ist, das Senden jedes Befehls (CMD2) der Verarbeitungseinheit (44) an das Sicherheitselement (ES) über zumindest einen vordefinierten Kontakt von den mehreren Kontakten zu blockieren, wenn eine Kommunikation durch Kontakt im Gange ist,
**dadurch gekennzeichnet, dass**
die erste Erfassungseinheit (UD1) geeignet ist, eine erste erfasste Spannung auf einem der externen Kontakte, der als Versorgungskontakt (54-1) bezeichnet wird, in eine zweite Spannung umzuwandeln, die sich von der ersten Spannung unterscheidet, und
wobei die Verarbeitungseinheit (44) dazu ausgestaltet ist, nur dann zu bestimmen, dass eine Kommunikation durch Kontakt zwischen dem Sicherheitselement (ES) und dem ersten externen Lesegerät (RD1) im Gange ist, wenn die zweite Spannung zumindest gleich einem ersten vorbestimmten Schwellenwert ist.

2. Elektronische Vorrichtung nach Anspruch 1, wobei die Kontakte (54) der Norm ISO 7816 entsprechen.

3. Elektronische Vorrichtung nach Anspruch 2, wobei der zumindest eine vordefinierte Kontakt die Kontakte (54-1, 54-2, 54-3, 54-4) umfasst, die durch die Norm ISO 7816 als Vcc, RST, CLK, GND und IO definiert sind.

4. Elektronische Vorrichtung nach einem der Ansprüche 1 bis 3, wobei die Steuereinheit (UC1) dazu ausgestaltet ist, das Senden jedes Befehls der Verarbeitungseinheit an das Sicherheitselement über jeden der Kontakte (54) des Sicherheitselements (ES) zu blockieren, wenn eine Kommunikation durch Kontakt im Gange ist.

5. Elektronische Vorrichtung nach einem der Ansprüche 1 bis 4, wobei die erste Erfassungseinheit (UD1) mit einem (54-1) der externen Kontakte verbunden ist, der als Versorgungskontakt bezeichnet wird, der dazu gedacht ist, eine elektrische Versorgung zu erhalten, wenn das Sicherheitselement (ES) im Modus mit Kontakt mit dem ersten externen Lesegerät (RD1) kooperiert, um das Sicherheitselement elektrisch zu versorgen.

6. Elektronische Vorrichtung nach einem der Ansprüche 1 bis 5, wobei das Sicherheitselement (ES) eine erste Funkfrequenzantenne (52) umfasst, wobei das Sicherheitselement geeignet ist, mit einem zweiten externen Lesegerät (RD2) der elektronischen Vorrichtung gemäß einem Modus ohne Kontakt unter Verwendung der ersten Funkfrequenzantenne zu kooperieren,
wobei die elektronische Vorrichtung umfasst:
- eine zweite Erfassungseinheit (UD2), die geeignet ist, zu erfassen, ob eine Kommunikation ohne Kontakt im Modus ohne Kontakt zwischen dem Sicherheitselement (ES) und dem zweiten externen Lesegerät (RD2) im Gange ist,
wobei die Steuereinheit (UC1) dazu ausgestaltet ist, das Senden jedes Befehls (CMD2) der Verarbeitungseinheit (44) an das Sicherheitselement (ES) über den zumindest einen vordefinierten Kontakt zu blockieren, wenn zumindest eine von einer Kommunikation durch Kontakt und einer Kommunikation ohne Kontakt im Gange ist.

7. Elektronische Vorrichtung nach Anspruch 6, umfassend eine zweite Funkfrequenzantenne (78), die von der ersten Funkfrequenzantenne (52) isoliert ist,
wobei die zweite Erfassungseinheit (UD2) geeignet ist, von der zweiten Funkfrequenzantenne (78) ein Funkfrequenzsignal zu erfassen, das durch die erste Funkfrequenzantenne (52) emittiert oder empfangen wird, das angibt, dass eine Kommunikation ohne Kontakt zwischen dem Sicherheitselement (ES) und dem zweiten externen Lesegerät (RD2) im Gange ist.

8. Elektronische Vorrichtung nach Anspruch 6 oder 7, wobei die zweite Erfassungseinheit (UD2) geeignet ist, eine Wechselspannung, die von der ersten Funkfrequenzantenne (52) erhalten wird, in eine Gleichspannung umzuwandeln.

9. Elektronische Vorrichtung nach Anspruch 8, wobei die Verarbeitungseinheit (44) dazu ausgestaltet ist, nur dann zu bestimmen, dass eine Kommunikation ohne Kontakt im Gange ist, wenn die Gleichspannung zumindest gleich einem zweiten vorbestimmten Schwellenwert ist.

10. Elektronische Vorrichtung nach einem der Ansprüche 1 bis 9, wobei die Steuereinheit (UC1) einen Schalter an der Schnittstelle zwischen dem Sicherheitselement (ES) und der Verarbeitungseinheit (44) umfasst, wobei der Schalter geeignet ist, zwischen einem blockierenden Zustand und einem leitenden Zustand zu schalten,
wobei der Schalter dazu ausgestaltet ist, sich fest in den blockierenden Zustand zu bringen, wenn die Steuereinheit das Senden jedes Befehls der Verarbeitungseinheit über den zumindest einen vordefinierten Kontakt blockiert, um das Sicherheitselement (ES) gegenüber der Verarbeitungseinheit (44) elektrisch zu isolieren.

11. Elektronische Vorrichtung nach einem der Ansprüche 1 bis 10, wobei die Verarbeitungseinheit (44) geeignet ist, in Kooperation mit dem Sicherheitselement (ES) eine Auswahl einer Anwendung zum Ausführen durch das Sicherheitselement umzusetzen,
wobei die Verarbeitungseinheit geeignet ist, diese Auswahl anhand einer Anweisung eines Benutzers umzusetzen, die über einen Aktuator (68) der elektronischen Vorrichtung empfangen wird.

12. Elektronische Vorrichtung nach einem der Ansprüche 1 bis 11, wobei die Verarbeitungseinheit (44) geeignet ist, eine Information von einem Datenelement zu erhalten, das von dem Sicherheitselement (ES) empfangen wird, und eine Anzeige der Information unter Verwendung einer Anzeigeeinheit der elektronischen Vorrichtung zu befehlen.

13. Elektronische Vorrichtung nach einem der Ansprüche 1 bis 12, wobei die elektronische Vorrichtung (40; 75) eine Chipkarte ist.

14. Blockierungsverfahren, das von einer elektronischen Vorrichtung (40; 75) umgesetzt wird, umfassend:
- ein Sicherheitselement (ES), das mehrere Kontakte (54) umfasst, wobei das Sicherheitselement geeignet ist, mit einem ersten externen Lesegerät (RD1) der elektronischen Vorrichtung gemäß einem Modus mit Kontakt unter Verwendung von zumindest einem der Kontakte zu kooperieren,
- eine Verarbeitungseinheit (44) außerhalb des Sicherheitselements (ES), wobei die Verarbeitungseinheit geeignet ist, über zumindest einen der Kontakte (54) einen Befehl (CMD2) an das Sicherheitselement zu senden,
- eine erste Verifizierung (S4) zum Bestimmen, ob eine Kommunikation durch Kontakt im Modus mit Kontakt zwischen dem Sicherheitselement und dem ersten externen Lesegerät im Gange ist, und
- die Blockierung (S6) der Sendung jedes Befehls der Verarbeitungseinheit (44) an das Sicherheitselement (ES) über zumindest einen vordefinierten Kontakt von den mehreren Kontakten (54), wenn eine Kommunikation durch Kontakt im Gange ist, **dadurch gekennzeichnet, dass** die erste Verifizierung eine Umwandlung einer erfassten ersten Spannung auf dem Versorgungskontakt (54-1) in eine zweite Spannung umfasst, die sich von der ersten Spannung unterscheidet, und
wobei die Verarbeitungseinheit (44) nur dann bestimmt, dass eine Kommunikation durch Kontakt zwischen dem Sicherheitselement (ES) und dem ersten externen Lesegerät (RD1) im Gange ist, wenn die zweite Spannung zumindest gleich einem ersten vorbestimmten Schwellenwert ist.

15. Blockierungsverfahren nach Anspruch 14, wobei das Sicherheitselement (ES) eine erste Funkfrequenzantenne (52) umfasst, wobei das Sicherheitselement geeignet ist, mit einem zweiten externen Lesegerät (RD2) der elektronischen Vorrichtung gemäß einem Modus ohne Kontakt unter Verwendung der ersten Funkfrequenzantenne zu kooperieren,
wobei die elektronische Vorrichtung umfasst:
- eine zweite Verifizierung (S4), um zu bestimmen, ob eine Kommunikation ohne Kontakt im Modus ohne Kontakt zwischen dem Sicherheitselement (ES) und dem zweiten externen Lesegerät (RD2) im Gange ist, und
- die Blockierung (S6) der Sendung jedes Befehls der Verarbeitungseinheit an das Sicherheitselement über den zumindest einen vordefinierten Kontakt, wenn zumindest eine von einer Kommunikation durch Kontakt und einer Kommunikation ohne Kontakt im Gange ist.

16. Computerprogramm (PG2), das Anweisungen für die Ausführung der Schritte eines Blockierungsverfahrens nach Anspruch 14 oder 15 beinhaltet, wenn das Programm von einem Computer ausgeführt wird.

17. Aufzeichnungsmedium, das von einem Computer lesbar ist, auf dem ein Computerprogramm (PG1) aufgezeichnet ist, das Anweisungen für die Ausführung der Schritte eines Blockierungsverfahrens nach Anspruch 14 oder 15 umfasst.

## Claims

1. An electronic device (40; 75) comprising;
- a secure element (ES) comprising a plurality of contacts (54), said secure element being able to cooperate with a first reader (RD1) external to said electronic device according to a contact mode by using at least one of said contacts;
- a processing unit (44) external to the secure element, said processing unit being able to send a command (CMD2) to the secure element (ES) via at least one of said contacts (54);
- a first detection unit (UD1) able to detect whether a contact communication is in progress in contact mode between the secure element (ES) and the first external reader (RD1); and
- a monitoring unit (UC1) configured to block the sending, via at least one predefined contact among said plurality of contacts, of each command (CMD2) from the processing unit (44) to the secure element (ES) as long as a said contact communication is in progress,
**characterized in that**
the first detection unit (UD1) is able to convert a first voltage detected on one of said external contacts, called power contact (54-1), into a second voltage different from the first voltage, and
wherein the processing unit (44) is configured to determine that a said contact communication is in progress between the secure element (ES) and the first external reader (RD1) only if the second voltage is at least equal to a first predetermined threshold value.

2. The electronic device according to claim 1, wherein said contacts (54) comply with ISO 7816 standard.

3. The electronic device according to claim 2, said at least one predefined contact comprises the contacts (54-1, 54-2, 54-3, 54-4) defined as Vcc, RST, CLK, GND and IO by said ISO 7816 standard.

4. The electronic device according to any one of claims 1 to 3, wherein the monitoring unit (UC1) is configured to block the sending, via each of said contacts (54) of the secure element (ES), of each command from the processing unit to the secure element as long as a said contact communication is in progress.

5. The electronic device according to any one of claims 1 to 4, wherein the first detection unit (UD1) is connected to one (54-1) of said external contacts, called power contact, intended to receive an electrical power supply when the secure element (ES) cooperates in contact mode with the first external reader (RD1) in order to supply electric power to said secure element.

6. The electronic device according to any one of claims 1 to 5, wherein the secure element (ES) comprises a first radiofrequency antenna (52), said secure element being able to cooperate with a second reader (RD2) external to said electronic device according to a contactless mode by using said first radiofrequency antenna,
said electronic device comprising:
- a second detection unit (UD2) able to detect whether a contactless communication is in progress in contactless mode between the secure element (ES) and the second external reader (RD2);
the monitoring unit (UC1) being configured to block the sending, via said at least one predefined contact, of each command (CMD2) from the processing unit (44) to the secure element (ES) as long as at least one among a said contact communication and a said contactless communication is in progress.

7. The electronic device according to claim 6, comprising a second radiofrequency antenna (78) isolated from the first radiofrequency antenna (52),
the second detection unit (UD2) being able, from the second radiofrequency antenna (78), to detect a radiofrequency signal emitted by or received from the first radiofrequency antenna (52) indicating that a said contactless communication is in progress between the secure element (ES) and the second external reader (RD2).

8. The electronic device according to claim 6 or 7, wherein the second detection unit (UD2) is able to convert an AC voltage obtained from the first radiofrequency antenna (52) into a DC voltage.

9. The electronic device according to claim 8, wherein the processing unit (44) is configured to determine that a said contactless communication is in progress only if the DC voltage is at least equal to a second predetermined threshold value.

10. The electronic device according to any one of claims 1 to 9, wherein the monitoring unit (UC1) comprises a switch at the interface between the secure element (ES) and the processing unit (44), said switch being able to switch between a blocking state and a conducting state,
the switch being configured to set in the blocking state when the monitoring unit blocks said sending of each command from the processing unit via said at least one predefined contact, so as to electrically isolate the secure element (ES) with respect to the processing unit (44).

11. The electronic device according to any one of claims 1 to 10, wherein the processing unit (44) is able to perform, in cooperation with the secure element (ES), a selection of an application to be executed by the secure element,
the processing unit being able to perform this selection from an instruction of a user received via an actuator (68) of the electronic device.

12. The electronic device according to any one of claims 1 to 11, wherein the processing unit (44) is able to obtain information from a data received from the secure element (ES) and to control a display of said information by using a display unit of the electronic device.

13. The electronic device according to any one of claims 1 to 12, wherein said electronic device (40; 75) is a smart card.

14. A blocking method implemented by an electronic device (40; 75) comprising:
- a secure element (ES) comprising a plurality of contacts (54), said secure element being able to cooperate with a first reader (RD1) external to said electronic device according to a contact mode by using at least one of said contacts;
- a processing unit (44) external to the secure element (ES), said processing unit being able to send a command (CMD2) to the secure element via at least one of said contacts (54);
- a first checking (S4) to determine whether a contact communication is in progress in contact mode between the secure element and the first external reader; and
- the blocking (S6) of the sending, via at least one predefined contact among said plurality of contacts (54), of each command from the processing unit (44) to the secure element (ES) as long as a said contact communication is in progress,
**characterized in that**
the first checking comprises a conversion of a first voltage detected on the power contact (54-1) into a second voltage different from the first voltage, and
wherein, the processing unit (44) determines that a said contact communication is in progress between the secure element (ES) and the first external reader (RD1) only if the second voltage is at least equal to a first predetermined threshold value.

15. The blocking method according to claim 14, wherein the secure element (ES) comprises a first radiofrequency antenna (52), said secure element being able to cooperate with a second reader (RD2) external to said electronic device according to a contactless mode by using said first radiofrequency antenna,
said electronic device comprising;
- a second checking (S4) to determine whether a contactless communication is in progress in contactless mode between the secure element (ES) and the second external reader (RD2); and
- the blocking (S6) of the sending, via said at least one predefined contact, of each command from the processing unit to the secure element as long as at least one among a said contact communication and a said contactless communication is in progress.

16. A computer program (PG2) including instructions for the execution of the steps of a blocking method according to claim 14 or 15 when said program is executed by a computer.

17. A recording medium readable by a computer on which a computer program (PG1) is recorded comprising instructions for the execution of the steps of a blocking method according to claim 14 or 15.
